# DEMANDE DE BREVET EUROPEEN

(11) **EP 1 586 593 A1**
(43) Date de publication de la demande: **19.10.2005**
(21) Numéro de dépôt: 04290974.7
(22) Date de dépôt: 13.04.2004
(51) Int. Cl.: C08F 220/02, B32B 27/00

(54) **Film de protection pour carrosseries automobiles**

(71) Demandeur: NOVACEL, F-76250 Deville-les-Rouen (FR)
(72) Inventeur: Coutey, Catherine, 76770 Houppeville (FR); Leddet, Claire, 76000 Rouen (FR); Masson, Jean-Loup, 76230 Bois- Guillaume (FR)
(74) Mandataire: Nevant, Marc

(57) **Abrégé**

L'invention a pour objet un film adhesif sensible à la pression particulièrement adapté à la protection des carrosseries automobiles.

Le film adhésif sensible à la pression selon l'invention comprend une couche support enduite d'une couche adhésive contenant:
- 100 parties en poids de dispersion acrylique aqueuse comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique, et
- 0,05 à 30 parties en poids, de préférence de 0,05 à 15 parties en poids, de réticulant(s).

## Description

L'invention concerne un film adhésif sensible à la pression.

L'invention trouve application dans le domaine de la protection des carrosseries automobiles.

Les carrosseries automobiles, fraîchement laquées, doivent être prémunies contre les salissures et les dommages occasionnés au cours de l'assemblage, du transport ou du stockage du véhicule. La carrosserie n'étant pas plane, le film est appliqué à la main sur les surfaces, entraînant la présence de bulles d'air entre la laque et le film. Ces conditions spécifiques de pose, ajoutées à une exposition naturelle prolongée, conduisent, après décollement du film, à la présence de marques ou de résidus, notamment à l'emplacement de la périphérie des bulles. Le marché automobile exige de minimiser la quantité de ces défauts.

Les films actuellement utilisés comportent une couche adhésive formée via une phase solvant. Par exemple, la demande de brevet EP-A-0 519 278 décrit un film obtenu par enduction d'un caoutchouc en phase solvant sur une couche support en polyoléfine, le module de l'adhésif étant compris entre 2.10⁴ et 70.10⁴ Pa à 60°C. Le brevet US 5 925 456 décrit un film obtenu par enduction d'un mélange à base d'EVA en phase solvant sur support en polyoléfine, et dont la couche adhésive a un angle de perte tan δ compris entre 0,6 et 1,0 mesuré à 60°C et 10⁻² Hz, et entre 0,4 et 0,7 mesuré à 60°C et 10 Hz.

Ces films présentent un taux de marques tolérable pour le marché automobile, mais ils ne sont pas satisfaisants sur le plan environnemental car ils nécessitent l'utilisation de produits en phase solvant.

On connaît par ailleurs d'après la demande de brevet EP-A-0 826 542 un film de protection de fenêtres de véhicules automobiles, dont la couche adhésive, de type polyuréthane, présente un faible niveau adhésif. La demande de brevet WO 01/96 489, décrit un film de protection dont la partie adhésive, enduite sur une couche support, est à base de polyuréthane réticulé. Cette couche adhésive est caractérisée par un angle de perte tan δ augmentant rapidement de 10⁻¹ à 10² rad/sec à température ambiante ou ne variant pas. Toutefois, les propriétés de ce film de protection ne permettent pas d'éviter la présence de marques ou de résidus en surface d'une laque automobile après déprotection. De plus, le niveau adhésif du film est trop faible par rapport à celui demandé par le marché.

Il a maintenant été découvert, et c'est le fondement de l'invention, qu'une dispersion aqueuse acrylique particulière permet de préparer des films de protection pour carrosseries automobiles, qui ne présentent pas les inconvénients mentionnés ci-dessus (marques, faible niveau adhésif, utilisation de solvant). Ces films peuvent protéger par exemple des laques de type acrylique-mélamine, alkyde-mélamine, ou polyuréthane, ces laques pouvant être de type mono- ou bicomposant (1K ou 2K).

Ainsi, selon un premier aspect, l'invention a pour objet un film adhésif sensible à la pression particulièrement adapté à la protection des carrosseries automobiles.

Le film adhésif sensible à la pression selon l'invention comprend une couche support enduite d'une couche adhésive contenant :
- 100 parties en poids de dispersion acrylique aqueuse comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique, et
- 0,05 à 30 parties en poids, de préférence de 0,05 à 15 parties en poids, de réticulant(s).

Bien évidemment, la somme des différents constituants de la dispersion acrylique est égale à 100%.

Le monomère porteur du ou des groupes carboxylique(s) est avantageusement choisi parmi l'acide acrylique, l'acide méthacrylique, l'acide itaconique, l'acide citraconique, l'acide fumarique, l'acide maléique et les dérivés de ces acides, l'acide acrylique et/ou méthacrylique étant préférés.

Avantageusement, la taille moyenne des particules de la dispersion acrylique aqueuse est inférieure à 200 nm.

Cette dispersion acrylique aqueuse peut être obtenue selon le procédé décrit dans la demande de brevet EP 1378527 A1 incorporée par référence dans la présente demande. A titre d'exemple d'une telle dispersion, on peut citer le produit actuellement commercialisé sous la dénomination Acronal® DS3559 (BASF).

Le ou les réticulant(s) utilisé(s) pour préparer la couche adhésive sont choisis avantageusement parmi les réticulants de type isocyanate, par exemple aliphatique ou alicyclique, de type aziridine, et de type carbodiimide. Il est possible d'utiliser plusieurs réticulants du même type, ou bien un mélange de réticulants de types différents.

A titre d'exemples de réticulants isocyanates aliphatiques susceptibles d'être utilisés dans le cadre de l'invention, on peut citer les diisocyanates aliphatiques, comme l'hexaméthylène diisocyanate, les trimères de ces diisocyanates, et les triisocyanates aliphatiques, ainsi que les polymères issus de ces monomères homo- ou copolymérisés, ou issus de l'addition d'un polyol ou d'une polyamine avec un ou plusieurs de ces monomères, le polyol ou la polyamine pouvant être un polyéther, un polyester, un polycarbonate, ou un polyacrylate.

A titre d'exemples de réticulants isocyanates alicycliques susceptibles d'être utilisés dans le cadre de l'invention, on peut citer les diisocyanates alicycliques, comme le 3-isocyanatométhyl-3,5,5-triméthylcyclohexyl isocyanate (plus connu sous le nom d'isophorone diisocyanate ou IPDI) ou le diphénylméthane diisocyanate hydrogéné, et les trimères de ces diisocyanates, et les triisocyanates alicycliques, ainsi que les polymères issus de ces monomères homo- ou copolymérisés, ou issus de l'addition d'un polyol ou d'une polyamine avec un ou plusieurs de ces monomères, le polyol ou la polyamine pouvant être un polyéther, un polyester, un polycarbonate, ou un polyacrylate.

A titre d'exemples de réticulants aziridines susceptibles d'être utilisés dans le cadre de l'invention, on peut citer le triméthylol propane tris(3-aziridinyl propionate), le triméthylol propane tris(3(2-méthyl-aziridinyl)-propionate), le triméthylol propane tris[2-aziridinyl butyrate], le triméthylolpropane-tris-(β-(N-aziridinyl)propionate, le tris(1-aziridinyl)phosphine oxyde, le tris(2-méthyl-1-aziridinyl)phosphine oxyde, le pentaérythritol tris-3-(1-aziridinyl propionate), le pentaérythritol-tris-(β-(N-aziridinyl)propionate, et le pentaérythritol tétrakis-3-(1-aziridinyl propionate).

A titre d'exemples de réticulants carbodiimides susceptibles d'être utilisés dans le cadre de l'invention, on peut citer le 1-éthyl-3-(3-diméthylaminopropyl) carbodiimide, le 1-(3-diméthylaminopropyl)-3-éthylocarbodiimide, le 1,3 dicyclohexyl carbodiimide, le N-cyclohexyl-N'-(méthylpolystyrène)carbodiimide, et les sels de ces composés.

La couche adhésive peut également contenir un ou plusieurs additifs tels que des agents stabilisants, des agents anti-bloquant, des agents anti-UV, des agents barrière aux UV, des agents plastifiants, des agents mouillants, des agents anti-mousse, des agents d'étalement, des résines tackifiantes.

Les résines tackifiantes utilisées dans le cadre de l'invention sont bien connues de l'homme du métier et peuvent être choisies notamment parmi les résines de colophane, les résines terpène-phénol, et les résines obtenues à partir de nappes pétrolières en C₅, (C₅)₂ et/ou C₉ qui peuvent ensuite être partiellement ou totalement hydrogénées. Ces résines ont avantageusement une température de ramollissement, mesurée selon la méthode « Ring and Ball » (norme ASTM E 28), inférieure ou égale à 140°C, généralement comprise dans la gamme de 75 à 140°C, de préférence dans la gamme de 75 à 125°C. A titre d'exemple, on peut citer les produits commercialisés sous la dénomination Escorez® (Exxon), Sylvares® (Arizona), Permalyn® (Eastman).

Ces additifs sont généralement présents en une quantité comprise dans la gamme de 0,1 à 10 % en poids, par rapport au poids de la couche adhésive.

L'épaisseur de la couche adhésive est généralement comprise entre 5 et 25 µm.

La couche support du film adhésif sensible à la pression est à base de polyoléfine(s). Cette couche support peut être du type monocouche ou du type multicouches.

A titre d'exemples de polyoléfines susceptibles d'être utilisées dans chaque couche de la couche support, on peut citer les polyéthylènes radicalaires (PE) ; les PE linéaires moyenne, basse ou très basse densité ; les polypropylènes (PP) ; les copolymères d'éthylène et de propylène (EPM) ; et les mélanges de ces composés.

L'expression « mélange de ces composés » inclut au sens de la présente invention un mélange de plusieurs polymères du même type, ou d'un ou plusieurs polymères d'un premier type avec un ou plusieurs polymères d'un ou plusieurs autres types.

Le PE radicalaire peut être indifféremment basse densité (0,910 ≤ d ≤ 0,925) ; moyenne densité (0,925 < d ≤ 0,940) ; ou haute densité (0,940 < d ≤ 0,960).

Les PE linéaires sont des copolymères d'éthylène et d'un monomère oléfinique en C₃-C₈, tel que le propène, le butène, l'hexène, le méthylpentène ou l'octène. Avantageusement, on utilise des PE linéaires basse ou très basse densité, c'est-à-dire avec une densité, mesurée selon la norme ASTM D 1505, comprise dans la gamme de 0,850 à 0,936.

Le PP possède avantageusement une densité, mesurée selon la norme ASTM D 1505, comprise dans la gamme de 0,890 à 0,910.

Les EPM ont de préférence une densité, mesurée selon la norme ASTM D 1505, comprise dans la gamme de 0,84 à 0,90 et avantageusement un taux de propylène compris dans la gamme de 25 à 60 % en poids.

La couche support peut également contenir une ou plusieurs polyoléfine(s) destinée(s) à augmenter l'accrochage de la couche adhésive et de la couche support.

A titre d'exemples de polyoléfines destinées à augmenter l'accrochage de la couche adhésive et de la couche support, on peut citer les copolymères d'éthylène et d'acétate de vinyle (EVA), les copolymères d'éthylène et de dérivé acrylique (EDA), ou les mélanges de ces composés.

Conformément à l'invention, les EVA ont un taux d'acétate de vinyle (VA) inférieur ou égal à 80 % en poids, de préférence inférieur ou égal à 30 % en poids. Ces EVA ont avantageusement un indice de fluidité, mesuré selon la norme ASTM 1238, compris dans la gamme de 0,1 à 40, de préférence dans la gamme de 0,1 à 10 dg/min.

Les EDA ont de préférence un taux de dérivé acrylique, tel que par exemple l'acrylate de butyle et/ou l'acide (méth)acrylique, inférieur ou égal à 40 % en poids. Ces EDA ont avantageusement un indice de fluidité, mesuré selon la norme ASTM 1238, compris dans la gamme de 0,1 à 40, de préférence dans la gamme de 0,1 à 10 dg/min.

La couche support peut également contenir un ou plusieurs additifs tels que des agents de matage, des agents glissants, des colorants, des stabilisants UV, des barrières UV, des antioxydants, des agents anti-bloquants. Lorsque la couche support est du type multicouches, chacune des couches peut contenir lesdits additifs.

Ces additifs sont généralement présents en une quantité comprise dans la gamme de 0,1 à 25 % en poids, par rapport au poids de la couche support.

La couche support est obtenue par (co)extrusion de la ou des polyoléfine(s) et des additifs éventuellement présents, et traitée Corona ou Plasma. Son épaisseur est généralement comprise entre 10 et 100 µm.

Selon un mode de réalisation particulier, le film adhésif conforme à l'invention comprend de l'autre côté de la couche support (c'est-à-dire du côté qui n'est pas en contact avec la couche adhésive) une couche de protection avantageusement anti-adhérente. Une telle couche de protection est bien connue de l'homme du métier.

Le film adhésif sensible à la pression conforme à l'invention est obtenu par enduction de la couche support avec la couche adhésive, selon des techniques bien connues de l'homme du métier.

Selon un premier aspect, le film ainsi obtenu présente un niveau adhésif, mesuré par une force de décollement (pelage 180°, vitesse de pelage = 300 mm/min, mesure à température ambiante), compris entre 150 et 350 cN/cm. Après des tests en température, humidité ou UV, ou combinant ces contraintes (par exemple 14 jours de cycle (6 heures à 23°C et 100% d'humidité relative, puis 6 heures à 40°C et 100% d'humidité relative)), le niveau adhésif est compris entre 150 et 500 cN/cm et les surfaces déprotégées présentent un taux de marques ou résidus d'adhésif acceptable pour le marché automobile.

Selon un second aspect, l'invention a pour objet l'utilisation du film adhésif sensible à la pression tel que défini ci-dessus, pour la protection des carrosseries automobiles.

Selon un autre aspect, l'invention a pour cible les carrosseries automobiles protégées par ledit film adhésif sensible à la pression.

L'invention est illustrée par les exemples ci-après, donnés à titre purement indicatif.

### Exemple 1

Une composition adhésive est préparée en mélangeant 100 parts de dispersion acrylique (Acronal® DS3559) et 3 parts de réticulant isocyanate (Vestanat® IPDI (Degussa)), de sorte à obtenir un extrait sec de 50% pour la composition. Le réticulant isocyanate est introduit dans la dispersion sous forme de prémélange à 25% dans l'acétate d'éthyle.

Un film support est fabriqué à l'aide d'un équipement de coextrusion trois couches, par coextrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (comonomère : butène) de densité 0,925 et d'indice de fluidité 0,7 ; et dans l'extrudeuse n°3 un polyéthylène radicalaire de densité 0,924 et d'indice de fluidité 0,7. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², puis séchée à 85°C pendant 5 secondes.

Ce film, appliqué manuellement sur une plaque automobile prélaquée de type polyuréthane, présente, à l'issu d'1 heure d'application, un niveau adhésif mesuré par une force de décollement (pelage 180°, vitesse de pelage = 300 mm/min, mesuré à température ambiante) d'environ 200 cN/cm. Après un test de type QUV pendant 300 heures (cycle 4 heures à 40°C et 100% d'humidité, puis 4 heures sous rayonnement UV), le niveau adhésif est d'environ 300 cN/cm et la laque automobile présente peu de marques ou de résidus d'adhésif après déprotection.

### Exemple 2

Une composition adhésive est préparée en mélangeant 100 parts de dispersion acrylique (Acronal® DS3559) et 3 parts de réticulant isocyanate (Desmodur® DA-L (Bayer)), de sorte à obtenir un extrait sec de 50% pour la composition. Le réticulant isocyanate est introduit dans la dispersion sous forme de prémélange à 50% dans l'acétate d'éthyle.

Un film support est fabriqué à l'aide d'un équipement de coextrusion trois couches, par coextrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (comonomère : butène) de densité 0,925 et d indice de fluidité 0,7 ; et dans l'extrudeuse n°3 un polyéthylène radicalaire de densité 0,924 et d'indice de fluidité 0,7. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², puis séchée à 85°C pendant 5 secondes.

Ce film, appliqué manuellement sur une plaque automobile prélaquée de type polyuréthane, présente, à l'issu d'1 heure d'application, un niveau adhésif, mesuré par une force de décollement (pelage 180°, vitesse de pelage = 300 mm/min, mesuré à température ambiante) d'environ 210 cN/cm. Après un test de type QUV pendant 300 heures (cycle 4 heures à 40°C et 100% d'humidité, puis 4 heures sous rayonnement UV), le niveau adhésif est d'environ 310 cN/cm et la laque automobile présente peu de marques ou de résidus d'adhésif après déprotection.

### Exemple 3

Une composition adhésive est préparée en mélangeant 100 parts de dispersion acrylique (Acronal® DS3559) et 3 parts de réticulant isocyanate (Desmodur® DA-L), de sorte à obtenir un extrait sec de 50% pour la composition. Le réticulant isocyanate est introduit dans la dispersion sous forme de prémélange à 50% dans l'acétate d'éthyle.

Un film support est fabriqué à l'aide d'un équipement de coextrusion trois couches, par coextrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (comonomère : butène) de densité 0,925 et d'indice de fluidité 0,7 ; et dans l'extrudeuse n°3 un mélange 60/40 en poids de polyéthylène radicalaire de densité 0,924 et d'indice de fluidité 0,7, et de copolymère éthylène - acétate de vinyle (93/7) d'indice de fluidité 2,5, la couche issue de ce dernier mélange étant destinée à être la couche enduite. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², puis séchée à 85°C pendant 5 secondes.

Ce film, appliqué manuellement sur une plaque automobile prélaquée de type polyuréthane, présente, à l'issu d'1 heure d'application, un niveau adhésif, mesuré par une force de décollement (pelage 180°, vitesse de pelage = 300 mm/min, mesuré à température ambiante) d'environ 210 cN/cm. Après un test en température et atmosphère humide pendant 14 jours (cycle 6 heures à 23°C et 100% d'humidité, puis 6 heures à 40°C et 100% d'humidité), la laque automobile présente peu de marques ou de résidus d'adhésif après déprotection.

## Revendications

1. Film adhésif sensible à la pression adapté à la protection des carrosseries automobiles, comprenant une couche support enduite d'une couche adhésive contenant :
• 100 parties en poids de dispersion acrylique aqueuse comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique, et
• 0,05 à 30 parties en poids de réticulant(s).

2. Film adhésif selon la revendication 1, dans lequel le monomère porteur d'au moins un groupe carboxylique est choisi parmi l'acide acrylique, l'acide méthacrylique, l'acide itaconique, l'acide citraconique, l'acide fumarique, l'acide maléique et les dérivés de ces acides.

3. Film adhésif selon l'une des revendications 1 à 2, dans lequel la taille moyenne des particules de la dispersion acrylique aqueuse est inférieure à 200 nm.

4. Film adhésif selon l'une des revendications 1 à 3, dans lequel le ou les réticulant(s) sont choisis parmi les réticulants de type isocyanate aliphatique ou alicyclique, les réticulants de type aziridine, et les réticulants de type carbodiimide.

5. Film adhésif selon l'une des revendications 1 à 4, dans lequel la couche support comprend un polyéthylène radicalaire ; un copolymère d'éthylène et d'un monomère oléfinique en C₃-C₈; un polypropylène ; un copolymère d'éthylène et de propylène ou un mélange de ces composés.

6. Film adhésif selon l'une des revendications 1 à 5, dans lequel la couche support comprend en outre une ou plusieurs polyoléfine(s) destinée(s) à augmenter l'accrochage de la couche adhésive et de la couche support choisie(s) notamment parmi les copolymères d'éthylène et d'acétate de vinyle, et les copolymères d'éthylène et de dérivé acrylique.

7. Film adhésif selon l'une des revendications 1 à 6, dans lequel la couche support est monocouche ou multicouches.

8. Utilisation d'un film adhésif tel que défini dans l'une des revendications 1 à 7 pour la protection des carrosseries automobiles.

9. Carrosseries automobiles protégées par le film adhésif tel que défini dans l'une des revendications 1 à 7.
